# EUROPÄISCHE PATENTANMELDUNG

(11) **EP 3 035 606 A1**
(43) Veröffentlichungstag der Anmeldung: **22.06.2016**
(21) Anmeldenummer: 14197934.4
(22) Anmeldetag: 15.12.2014
(51) Int. Cl.: H04L 12/46

(54) **Verfahren zur Datenübermittlung in einem zumindest 2 virtuelle lokale Netze umfassenden Kommunikationsnetz und Kommunikationsgerät für ein industrielles Automatisierungssystem**

(71) Anmelder: Siemens Aktiengesellschaft, 80333 München (DE)
(72) Erfinder: Götz, Franz-Josef, 91180 Heideck (DE); Kießling, Marcel, 90419 Nürnberg (DE); Schmitt, Jürgen, 90766 Fürth (DE)

(57) **Zusammenfassung**

Zur Datenübermittlung in einem zumindest 2 virtuelle lokale Netze umfassenden Kommunikationsnetz wird Datenströmen jeweils eine Datenstrom-individuelle Ziel-Gerätekennung zugeordnet. Bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, wird ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qbv sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch. Steuerungsdaten müssen nämlich üblicherweise innerhalb eines Bearbeitungszyklus übertragen und verarbeitet werden. Beispielsweise werden zu Beginn eines Bearbeitungszyklus von sämtlichen Sensoren Steuerungsdaten an eine zugeordnete speicherprogrammierbare Steuerung gesendet. Nach einer anschließenden Berechnung auf Basis von den Sensoren empfangener Steuerungsdaten sendet die speicherprogrammierbare Steuerung Steuerungsdaten an Aktoren des industriellen Automatisierungssystems. Danach erfolgt innerhalb eines nächsten Bearbeitungszyklus eine erneute Sensordatenabfrage. Damit ausreichend Zeit für eine Verarbeitung von Steuerungsdaten innerhalb eines Bearbeitungszyklus verbleibt, sollten Datenrahmen mit Steuerungsdaten möglichst zu Beginn eines Bearbeitungszyklus übertragen werden, insbesondere bei Verwendung dezentraler Peripheriegeräte oder dezentraler Ein- und Ausgabeeinheiten.

Aus WO 2014/072374 A1 ist ein Verfahren zur Übermittlung von Multicast-Datenströmen in einem industriellen Automatisierungssystem mittels Link-State-Routing-Protokollen bekannt, bei dem nicht für alle möglichen Knoten-Knoten-Verbindungen Routing-Tabellen berechnet werden, sondern nur für ausgewählte zeitkritische Pfade, insbesondere zwischen "Talkers" als Datenquellen und "Listeners" als Abonnenten von Datenquellen in industriellen Automatisierungssystemen. Für eine Berechnung von Routing-Pfaden in derartigen Kommunikationsnetzen werden Kommunikationsbeziehungen beschreibende Informationen mittels eines Link-State-Routing-Protokolls innerhalb des Kommunikationsnetzes verteilt. Die Informationen über Kommunikationsbeziehungen umfassen beispielsweise Angaben über eine Zusammenfassung von Kommunikationsteilnehmern innerhalb eines Multicast-Pfades bzw. über "Talkers" und zugeordnete "Listeners".

In der älteren europäischen Patentanmeldung mit dem Anmeldeaktenzeichen 13176454.0 ist ein Verfahren zur Übermittlung von Datenrahmen mittels eines Kommunikationsgeräts eines industriellen Automatisierungssystems beschrieben, bei dem mittels des Kommunikationsgeräts zu übermittelnden Datenrahmen jeweils eine Übermittlungspriorität zugeordnet ist. Für über zumindest einen ausgewählten Anschluss des Kommunikationsgeräts übermittelte Datenrahmen, die eine über einem vorgebbaren Prioritätsschwellwert liegende Übermittlungspriorität aufweisen, wird eine übermittelte Datenmenge erfasst. Die übermittelte Datenmenge wird periodisch innerhalb zumindest eines Überwachungszyklus erfasst. Die für jeden Überwachungszyklusdurchlauf erfasste Datenmenge wird auf eine Überschreitung eines vorgebbaren Mengenschwellwerts überwacht. Der ausgewählte Anschluss wird bei einer Überschreitung des Mengenschwellwerts für einen Überwachungszyklusdurchlauf während einer Sperrzeit bis zu einem Ende des jeweiligen Überwachungszyklusdurchlaufs gegen eine Übermittlung von Datenrahmen mit einer über dem Prioritätsschwellwert liegenden Übermittlungspriorität gesperrt.

Der vorliegenden Erfindung liegt die Aufgabe zugrunde, ein Verfahren zur Datenübermittlung in einem zumindest 2 virtuelle lokale Netze umfassenden Kommunikationsnetz anzugeben, das einen Verzicht auf Internet-Protokoll-basierte Router ermöglicht, sowie ein zur Durchführung des Verfahrens geeignetes Kommunikationsgerät anzugeben.

Diese Aufgabe wird erfindungsgemäß durch ein Verfahren mit den in Anspruch 1 angegebenen Merkmalen und durch ein Kommunikationsgerät mit den in Anspruch 14 angegebenen Merkmalen gelöst. Vorteilhafte Weiterbildungen des erfindungsgemäßen Verfahrens sind in den abhängigen Ansprüchen angegeben.

Entsprechend dem erfindungsgemäßen Verfahren zur Datenübermittlung in einem zumindest 2 virtuelle lokale Netze umfassenden Kommunikationsnetz sind Kommunikationsgeräte jeweils einem virtuellen lokalen Netz zugeordnet und weisen innerhalb ihres virtuellen lokalen Netzes eine eindeutige Gerätekennung auf. Zu übermittelnde bzw. übermittelte Datenrahmen weisen jeweils einen Kopfbereich auf, in den zumindest eine Ziel-Gerätekennung eingetragen ist. Zusätzlich kann dort eine Quell-Gerätekennung eingetragen sein. Eine Zuordnung zu einem virtuellen lokalen Netz bzw. VLAN kann beispielsweise portbasiert, MAC-basiert (Media Access Control) oder protokollbasiert erfolgen. An alle Kommunikationsgeräte eines virtuellen lokalen Netzes gerichtete Datenrahmen, beispielsweise Boadcast-Datenrahmen, werden jeweils nur innerhalb des jeweiligen lokalen Netzes übermittelt. Eine Zuordnung eines Datenrahmens zu einem virtuellen lokalen Netz wird jeweils durch einen Eintrag in einem Kopfbereich des Datenrahmens bei einer Übermittlung durch ein Koppel-Kommunikationsgerät gekennzeichnet. Mit jedem Koppel-Kommunikationsgerät ist eine Mehrzahl von Kommunikationsgeräten verbindbar. Die Koppel-Kommunikationsgeräte können beispielsweise Switches oder Bridges sein.

Datenströmen wird erfindungsgemäß jeweils eine Datenstrom-individuelle Ziel-Gerätekennung zugeordnet. Dabei umfassen Datenströme jeweils eine Sequenz von Datenrahmen. Bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, wird ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt. Auf diese Weise kann auf eine Verwendung von Internet-Protokoll-basierten Routern zur VLAN-übergreifenden Übermittlung von Datenströmen verzichtet werden. Insbesondere in industriellen Automatisierungssystemen ist dies aufgrund nachteiliger Echtzeit-Datenübermittlungseigenschaften von Routern ein großer Vorteil. Darüber hinaus kann auf eine Verwendung des Internet-Protokolls verzichtet werden, das durch zusätzlich erforderliche Protokollinformationen zu einem größeren Datenvolumen und -verarbeitungsaufwand führt. Im Vergleich zu Internet-Protokoll-basierten Lösungen können also Sende-, Empfangs- sowie Verarbeitungszeiten und damit Gesamt-Übermittlungszeiten verkürzt werden.

Der einem Datenstrom innerhalb eines virtuellen lokalen Netzes zugeordnete Identifikator umfasst vorzugsweise eine Kennung des jeweiligen virtuellen lokalen Netzes bzw. die Datenstrom-individuelle Ziel-Gerätekennung. Entsprechend einer vorteilhaften Weiterbildung der vorliegenden Erfindung werden für Datenstrom-individuelle Ziel-Gerätekennungen jeweils Pfade innerhalb des jeweiligen virtuellen lokalen Netzes zur Übermittlung der vom Datenstrom umfassten Datenrahmen festgelegt. Dabei werden die Datenströme insbesondere jeweils unidirektional innerhalb periodischer Zeitintervalle übermittelt.

Entsprechend einer bevorzugten Ausgestaltung des erfindungsgemäßen Verfahrens ist den Datenströmen jeweils eine festgelegte Dienstgüte für ihre Übermittlung zugeordnet. Dabei werden die Datenströme jeweils mit einer ihrer zugeordneten Dienstgüte entsprechenden Priorisierung bzw. Datenrate übermittelt. Darüber hinaus wird für die Datenströme vorteilhafterweise jeweils eine übermittelte Datenmenge erfasst. Dabei wird die übermittelte Datenmenge periodisch innerhalb eines Überwachungszyklus erfasst, der eine Vielzahl von Datenrahmen umfasst. Die für jeden Überwachungszyklusdurchlauf erfasste Datenmenge wird auf eine Überschreitung eines vorgebbaren Mengenschwellwerts überprüft. Bei einer Überschreitung des Mengenschwellwerts für einen Überwachungszyklusdurchlauf wird eine Übermittlung des jeweiligen Datenstroms während einer Sperrzeit bis zu einem Ende des jeweiligen Überachungszyklusdurchlaufs abgebrochen, pausiert bzw. mit einer reduzierten Priorisierung fortgesetzt wird. Der jeweilige Mengenschwellwert ist vorzugsweise durch die einem Datenstrom jeweils zugeordnete Dienstgüte vorgegeben. Dies ermöglicht eine effiziente Ausnutzung zur Verfügung stehender Übermittlungsressourcen und geringe Latenzzeiten für VLAN-übergreifende Datenströme.

Die an alle Kommunikationsgeräte eines virtuellen lokalen Netzes gerichteten Datenrahmen sind insbesondere Broadcast-Datenrahmen, während die Quell-Gerätekennungen und Ziel-Gerätekennungen vorzugsweise Media-Access-Control-Adressen sind. Entsprechend einer besonders bevorzugten Ausgestaltung des erfindungsgemäßen Verfahrens werden zu übermittelnden Datenrahmen zugeordnete Kombinationen, die Media-Access-Control-Adressen und Kennungen von virtuellen lokalen Netzen umfassen, jeweils bei einer Übermittlung von Nicht-Broadcast-Datenrahmen von Quell-Kommunikationsgeräten des ersten virtuellen lokalen Netzes an Ziel-Kommunikationsgeräte des zweiten lokalen Netzes mittels einer Umsetzereinheit umgewandelt werden. Die Umsetzereinheit ist vorzugsweise ein Koppel-Kommunikationsgerät oder ein Quell-Kommunikationsgerät, das Sicherungsschicht-Kommunikationsfunktionen und eine Umsetztabelle umfasst.

Das erfindungsgemäße Kommunikationsgerät für ein industrielles Automatisierungssystem zur Durchführung eines Verfahrens entsprechend vorangehenden Ausführungen zumindest einen Anschluss für eine Verbindung mit innerhalb eines Kommunikationsnetzes miteinander verbundenen Kommunikationsgeräten. Dabei sind die Kommunikationsgeräte jeweils einem virtuellen lokalen Netz zugeordnet und weisen innerhalb ihres virtuellen lokalen Netzes eine eindeutige Gerätekennung auf. Zu übermittelnde bzw. übermittelte Datenrahmen weisen außerdem jeweils einen Kopfbereich auf, in den zumindest eine Ziel-Gerätekennung eingetragen ist. Darüber hinaus ist zumindest eine dem zumindest einen Anschluss zugeordnete Sende- und Empfangseinheit vorgesehen. Des weiteren ist das Kommunikationsgerät dafür ausgestaltet und eingerichtet, dass an alle Kommunikationsgeräte eines virtuellen lokalen Netzes gerichtete Datenrahmen jeweils nur innerhalb des jeweiligen lokalen Netzes übermittelt werden. Außerdem ist das Kommunikationsgerät dafür ausgestaltet und eingerichtet, dass eine Zuordnung eines Datenrahmens zu einem virtuellen lokalen Netz jeweils durch einen Eintrag in einem Kopfbereich des Datenrahmens gekennzeichnet wird.

Das erfindungsgemäße Kommunikationsgerät ist ferner dafür ausgestaltet und eingerichtet ist, dass Datenströmen jeweils eine Datenstrom-individuelle Ziel-Gerätekennung zugeordnet wird. Dabei umfassen Datenströme jeweils eine Sequenz von Datenrahmen. Darüber hinaus ist das Kommunikationsgerät dafür ausgestaltet und eingerichtet ist, dass bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt wird.

Die an alle Kommunikationsgeräte eines virtuellen lokalen Netzes gerichteten Datenrahmen sind insbesondere Broadcast-Datenrahmen, während die Quell-Gerätekennungen und Ziel-Gerätekennungen vorzugsweise Media-Access-Control-Adressen sind. Entsprechend einer bevorzugten Ausgestaltung ist das erfindungsgemäße Kommunikationsgerät dafür ausgestaltet und eingerichtet, dass zu übermittelnden Datenrahmen zugeordnete Kombinationen, die Media-Access-Control-Adressen und Identifikatoren von virtuellen lokalen Netzen umfassen, jeweils bei einer Übermittlung von Nicht-Broadcast-Datenrahmen von Quell-Kommunikationsgeräten des ersten virtuellen lokalen Netzes an Ziel-Kommunikationsgeräte des zweiten lokalen Netzes umgewandelt werden. Vorzugsweise umfasst das erfindungsgemäße Kommunikationsgerät, das beispielsweise ein Switch oder eine Bridge sein kann, Sicherungsschicht-Kommunikationsfunktionen und eine Umsetztabelle.

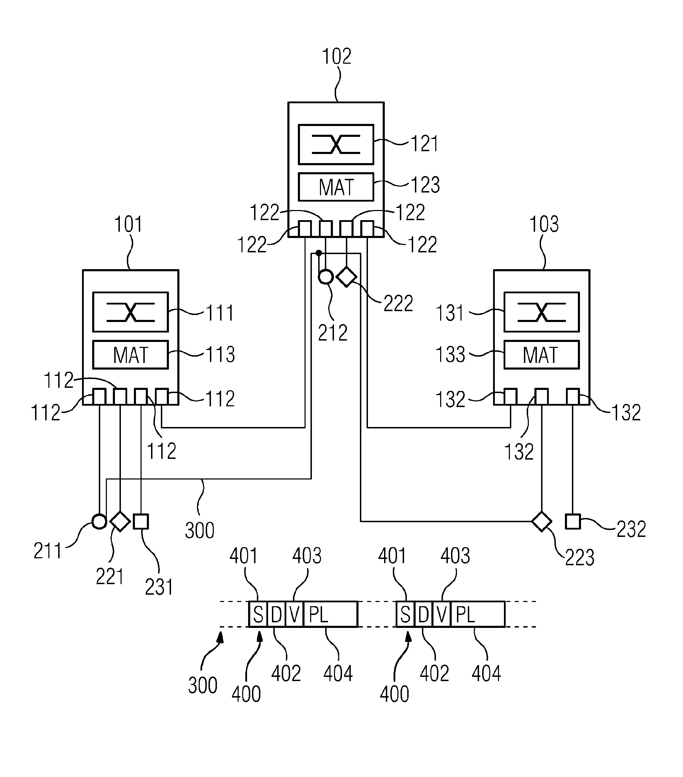

Die vorliegende Erfindung wird nachfolgend an einem Ausführungsbeispiel anhand der Zeichnung näher erläutert. Es zeigt die
- Figur: eine mehrere virtuelle lokale Netze umfassendes Kommunikationsnetz mit mehreren Switches und an diesen angeschlossene Kommunikationsgeräte.

Das in der Figur dargestellte Kommunikationsnetz umfasst 3 Switches 101-103, an die jeweils mehrere Kommunikationsgeräte 211-212, 221-223, 231-232 angeschlossen sind. Die Switches 101-103 weisen jeweils mehreren Anschlüsse 112, 122, 132 für die Kommunikationsgeräte 211-212, 221-223, 231-232, die beispielsweise in industrielle Automatisierungsgeräte, wie speicherprogrammierbare Steuerungen, integriert sein können und im vorliegenden Ausführungsbeispiel portbasiert insgesamt 3 unterschiedlichen virtuellen lokalen Netzen (VLAN) zugeordnet sind. Dabei sind ein erstes Kommunikationsgerät 211 an einem ersten Switch 101 und ein erstes Kommunikationsgerät 212 an einem zweiten Switch 102 einem ersten VLAN zugeordnet, während ein zweites Kommunikationsgerät 221 am ersten Switch 101, ein zweites Kommunikationsgerät 222 am zweiten Switch 102 und ein erstes Kommunikationsgerät 223 an einem dritten Switch 103 einem zweiten VLAN zugeordnet sind. Darüber hinaus sind ein drittes Kommunikationsgerät 231 am ersten Switch 101 und ein zweites Kommunikationsgerät 232 am dritten Switch 103 einem dritten VLAN zugeordnet. Damit sind die Kommunikationsgeräte 211-212, 221-223, 231-232 jeweils einem VLAN zugeordnet. Innerhalb ihres VLAN weisen die Kommunikationsgeräte 211-212, 221-223, 231-232 jeweils eine eindeutige Media-Access-Control-Adresse (MAC-Adresse) als Gerätekennung auf. Zu übermittelnde bzw. übermittelte Datenrahmen 400 weisen jeweils vor einem Nutzdatenbereich 404 einen Kopfbereich auf, in den eine Quell-MAC-Adresse 401 und eine Ziel-MAC-Adresse 402 für den jeweiligen Datenrahmen eingetragen sind.

Neben einem ihre Anschlüsse 112, 122, 132 miteinander verbindenden Backplane-Switch 111 als Koppelelement umfassen die Switches 101-103 jeweils das Sicherungsschicht-Kommunikationsfunktionen, die Schicht 2 entsprechend OSI-Kommunikationsmodell zugeordnet sind. Darüber hinaus sind die Switches 101-103 jeweils dafür ausgestaltet und eingerichtet ist, dass an alle Kommunikationsgeräte eines VLAN gerichtete Broadcast-Datenrahmen jeweils nur innerhalb des jeweiligen lokalen Netzes übermittelt werden. Außerdem sind die Switches 101-103 dafür ausgestaltet und eingerichtet ist, dass eine Zuordnung eines Datenrahmens 400 zu einem VLAN jeweils durch ein VLAN-Tag 403 im Kopfbereich des jeweiligen Datenrahmens 400 gekennzeichnet wird.

Datenströmen 300, die jeweils eine Sequenz von Datenrahmen 400 umfassen und unidirektional innerhalb periodischer Zeitintervalle übermittelt werden, wird jeweils eine Datenstrom-individuelle Ziel-MAC-Adresse zugeordnet. Im vorliegenden Ausführungsbeispiel wird ein solcher Datenstrom 300 vom ersten Kommunikationsgerät 211 am ersten Switch 101 an das erste Kommunikationsgerät 212 am zweiten Switch 102 und VLAN-übergreifend an das erste Kommunikationsgerät 223 am dritten Switch 103 gesendet. Generell wird bei einer Übermittlung eines Datenstroms von einem Quell-Kommunikationsgerät, das einem ersten VLAN zugeordnet ist, an ein Ziel-Kommunikationsgerät, das einem zweiten VLAN zugeordnet ist, ein dem Datenstrom innerhalb des ersten VLAN zugeordneter Identifikator in einen dem Datenstrom innerhalb des zweiten VLAN zugeordneten Identifikator umgewandelt. Hierzu umfassen die Switches 101-103 jeweils eine Umsetzereinheit 113, 123, 133 mit Umsetztabelle. Im vorliegenden Ausführungsbeispiel umfasst der einem Datenstrom innerhalb eines VLAN zugeordnete Identifikator eine Kennung des jeweiligen VLAN und die Ziel-MAC-Adresse des Datenstroms. Die Umsetzereinheiten 113, 123, 133 der Switches 101-103 sind auch jeweils dafür vorgesehen, dass zu übermittelnden Datenrahmen zugeordnete Kombinationen aus MAC-Adressen und VLAN-Kennungen bei einer Übermittlung von Nicht-Broadcast-Datenrahmen von Quell-Kommunikationsgeräten eines ersten VLAN an Ziel-Kommunikationsgeräte eines zweiten VLAN mittels der jeweiligen Umsetztabelle umgewandelt werden.

Für Datenstrom-individuelle Ziel-Gerätekennungen werden vorteilhafterweise jeweils Pfade innerhalb des jeweiligen VLAN zur Übermittlung der vom Datenstrom umfassten Datenrahmen festgelegt bzw. reserviert. Darüber hinaus wird den Datenströmen vorzugsweise jeweils eine festgelegte Dienstgüte für ihre Übermittlung zugeordnet. Damit werden die Datenströme jeweils mit einer ihrer zugeordneten Dienstgüte entsprechenden Priorisierung bzw. Datenrate übermittelt.

Im vorliegenden Ausführungsbeispiel wird für die Datenströme jeweils eine übermittelte Datenmenge erfasst, und zwar periodisch innerhalb eines Überwachungszyklus, der eine Vielzahl von Datenrahmen umfasst. Die für jeden Überwachungszyklusdurchlauf erfasste Datenmenge wird fortlaufend auf eine Überschreitung eines vorgebbaren Mengenschwellwerts überprüft. Bei einer Überschreitung des Mengenschwellwerts für einen Überwachungszyklusdurchlauf wird eine Übermittlung des jeweiligen Datenstroms während einer Sperrzeit bis zu einem Ende des jeweiligen Überwachungszyklusdurchlaufs abgebrochen, pausiert oder mit einer reduzierten Priorisierung fortgesetzt. Der jeweilige Mengenschwellwert ist dabei durch die einem Datenstrom jeweils zugeordnete Dienstgüte vorgegeben.

## Patentansprüche

1. Verfahren zur Datenübermittlung in einem zumindest 2 virtuelle lokale Netze umfassenden Kommunikationsnetz, bei dem
- Kommunikationsgeräte jeweils einem virtuellen lokalen Netz zugeordnet sind und innerhalb ihres virtuellen lokalen Netzes eine eindeutige Gerätekennung aufweisen,
- zu übermittelnde und/oder übermittelte Datenrahmen jeweils einen Kopfbereich aufweisen, in den zumindest eine Ziel-Gerätekennung eingetragen ist,
- an alle Kommunikationsgeräte eines virtuellen lokalen Netzes gerichtete Datenrahmen jeweils nur innerhalb des jeweiligen lokalen Netzes übermittelt werden,
- eine Zuordnung eines Datenrahmens zu einem virtuellen lokalen Netz jeweils durch einen Eintrag in einem Kopfbereich des Datenrahmens bei einer Übermittlung durch ein Koppel-Kommunikationsgerät gekennzeichnet wird, wobei mit jedem Koppel-Kommunikationsgerät eine Mehrzahl von Kommunikationsgeräten verbindbar ist,
- Datenströmen jeweils eine Datenstrom-individuelle Ziel-Gerätekennung zugeordnet wird, wobei Datenströme jeweils eine Sequenz von Datenrahmen umfassen,
- bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt wird.

2. Verfahren nach Anspruch 1,
bei dem der einem Datenstrom innerhalb eines virtuellen lokalen Netzes zugeordnete Identifikator eine Kennung des jeweiligen virtuellen lokalen Netzes und/oder die Datenstrom-individuelle Ziel-Gerätekennung umfasst.

3. Verfahren nach einem der Ansprüche 1 oder 2,
bei dem eine Zuordnung eines Datenrahmens zu einem virtuellen lokalen Netz portbasiert durch ein Koppel-Kommunikationsgerät in Abhängigkeit eines Empfangsports am Koppel-Kommunikationsgerät erfolgt.

4. Verfahren nach einem der Ansprüche 1 bis 3,
bei dem eine Zuordnung eines Datenrahmens zu einem virtuellen lokalen Netz anhand einer in den Datenrahmen eingefügten Kennung erfolgt.

5. Verfahren nach einem der Ansprüche 1 bis 4,
bei dem jeweils in einen Kopfbereich zu übermittelnder und/oder übermittelter Datenrahmen eine Quell-Gerätekennung eingetragen ist.

6. Verfahren nach einem der Ansprüche 1 bis 5,
bei dem für Datenstrom-individuelle Ziel-Gerätekennungen jeweils Pfade innerhalb des jeweiligen virtuellen lokalen Netzes zur Übermittlung der vom Datenstrom umfassten Datenrahmen festgelegt werden.

7. Verfahren nach einem der Ansprüche 1 bis 6,
bei dem die Datenströme jeweils unidirektional innerhalb periodischer Zeitintervalle übermittelt werden.

8. Verfahren nach Anspruch 7,
bei dem den Datenströmen jeweils eine festgelegte Dienstgüte für ihre Übermittlung zugeordnet ist, und bei dem die Datenströme jeweils mit einer ihrer zugeordneten Dienstgüte entsprechenden Priorisierung und/oder Datenrate übermittelt werden.

9. Verfahren nach Anspruch 8,
bei dem für die Datenströme jeweils eine übermittelte Datenmenge erfasst wird, und bei dem die übermittelte Datenmenge periodisch innerhalb eines Überwachungszyklus, der eine Vielzahl von Datenrahmen umfasst, erfasst wird, und bei dem die für jeden Überwachungszyklusdurchlauf erfasste Datenmenge auf eine Überschreitung eines vorgebbaren Mengenschwellwerts überprüft wird, und bei dem eine Übermittlung des jeweiligen Datenstroms bei einer Überschreitung des Mengenschwellwerts für einen Überwachungszyklusdurchlauf während einer Sperrzeit bis zu einem Ende des jeweiligen Überwachungszyklusdurchlaufs abgebrochen, pausiert und/oder mit einer reduzierten Priorisierung fortgesetzt wird.

10. Verfahren nach Anspruch 9,
bei dem der jeweilige Mengenschwellwert durch die einem Datenstrom jeweils zugeordnete Dienstgüte vorgegeben ist.

11. Verfahren nach einem der Ansprüche 1 bis 10,
bei dem die an alle Kommunikationsgeräte eines virtuellen lokalen Netzes gerichteten Datenrahmen Broadcast-Datenrahmen sind, und bei dem die Quell-Gerätekennungen und Ziel-Gerätekennungen Media-Access-Control-Adressen sind, und bei dem zu übermittelnden Datenrahmen zugeordnete Kombinationen, die Media-Access-Control-Adressen und Kennungen von virtuellen lokalen Netzen umfassen, jeweils bei einer Übermittlung von Nicht-Broadcast-Datenrahmen von Quell-Kommunikationsgeräten des ersten virtuellen lokalen Netzes an Ziel-Kommunikationsgeräte des zweiten lokalen Netzes mittels einer Umsetzereinheit umgewandelt werden.

12. Verfahren nach Anspruch 11,
bei dem die Umsetzereinheit ein Koppel-Kommunikationsgerät oder ein Quell-Kommunikationsgerät ist, das Sicherungsschicht-Kommunikationsfunktionen und eine Umsetztabelle umfasst.

13. Verfahren nach einem der Ansprüche 1 bis 12,
bei dem die Koppel-Kommunikationsgeräte Switches oder Bridges sind.

14. Kommunikationsgerät für ein industrielles Automatisierungssystem zur Durchführung eines Verfahrens nach einem der Ansprüche 1 bis 13
- zumindest einem Anschluss für eine Verbindung mit innerhalb eines Kommunikationsnetzes miteinander verbundenen Kommunikationsgeräten, wobei die Kommunikationsgeräte jeweils einem virtuellen lokalen Netz zugeordnet sind und innerhalb ihres virtuellen lokalen Netzes eine eindeutige Gerätekennung aufweisen, und wobei zu übermittelnde und/oder übermittelte Datenrahmen jeweils einen Kopfbereich aufweisen, in den zumindest eine Ziel-Gerätekennung eingetragen ist,
- zumindest einer dem zumindest einen Anschluss zugeordneten Sende- und Empfangseinheit,
- wobei das Kommunikationsgerät dafür ausgestaltet und eingerichtet ist, dass an alle Kommunikationsgeräte eines virtuellen lokalen Netzes gerichtete Datenrahmen jeweils nur innerhalb des jeweiligen lokalen Netzes übermittelt werden,
- wobei das Kommunikationsgerät dafür ausgestaltet und eingerichtet ist, dass eine Zuordnung eines Datenrahmens zu einem virtuellen lokalen Netz jeweils durch einen Eintrag in einem Kopfbereich des Datenrahmens gekennzeichnet wird,
- wobei das Kommunikationsgerät dafür ausgestaltet und eingerichtet ist, dass Datenströmen jeweils eine Datenstrom-individuelle Ziel-Gerätekennung zugeordnet wird, wobei Datenströme jeweils eine Sequenz von Datenrahmen umfassen,
- wobei das Kommunikationsgerät dafür ausgestaltet und eingerichtet ist, dass bei einer Übermittlung eines Datenstroms von einem Quell-Kommunikationsgerät, das einem ersten virtuellen lokalen Netz zugeordnet ist, an ein Ziel-Kommunikationsgerät, das einem zweiten lokalen Netz zugeordnet ist, ein dem Datenstrom innerhalb des ersten virtuellen lokalen Netzes zugeordneter Identifikator in einen dem Datenstrom innerhalb des zweiten virtuellen lokalen Netzes zugeordneten Identifikator umgewandelt wird.

15. Kommunikationsgerät nach Anspruch 14,
bei dem die an alle Kommunikationsgeräte eines virtuellen lokalen Netzes gerichteten Datenrahmen Broadcast-Datenrahmen sind, und bei dem die Quell-Gerätekennungen und Ziel-Gerätekennungen Media-Access-Control-Adressen sind, und bei dem das Koppel-Kommunikationsgerät dafür ausgestaltet und eingerichtet ist, dass zu übermittelnden Datenrahmen zugeordnete Kombinationen, die Media-Access-Control-Adressen und Identifikatoren von virtuellen lokalen Netzen umfassen, jeweils bei einer Übermittlung von Nicht-Broadcast-Datenrahmen von Quell-Kommunikationsgeräten des ersten virtuellen lokalen Netzes an Ziel-Kommunikationsgeräte des zweiten lokalen Netzes umgewandelt werden.

16. Kommunikationsgerät nach einem der Ansprüche 14 oder 15, bei dem das Kommunikationsgerät ein Koppel-Kommunikationsgerät oder ein Quell-Kommunikationsgerät ist, und bei dem das Kommunikationsgerät Sicherungsschicht-Kommunikationsfunktionen und eine Umsetztabelle umfasst.

17. Kommunikationsgerät nach einem der Ansprüche 14 bis 16, bei dem das Kommunikationsgerät mehrere Anschlüsse für eine Verbindung mit innerhalb eines industriellen Kommunikationsnetzes miteinander verbundenen Kommunikationsgeräten aufweist, und bei dem das Kommunikationsgerät mehrere Sende- und Empfangseinheiten aufweist, und bei dem das Kommunikationsgerät ein die Sende- und Empfangseinheiten miteinander verbindendes Koppelelement aufweist, und bei dem das Kommunikationsgerät ein Switch oder eine Bridge ist.
